# EUROPEAN PATENT APPLICATION

(11) **EP 4 262 068 A1**
(43) Date of publication of application: **18.10.2023**
(21) Application number: 21903947.6
(22) Date of filing: 09.12.2021
(51) Int. Cl.: H02K 17/18, H02K 1/22, H02K 3/28

(54) **ROTOR FOR AN ASYNCHRONOUS ELECTRIC MACHINE**

(30) Priority: 10.12.2020 RU 2020140717
(71) Applicant: Tau, Tatyana Anatolevna, kv. 54 Saratov, 410015 (RU); Sieklucki, Sergey Anatolevich, Shelkovskaya 366108, Chechenskaya respublika (RU)
(72) Inventor: GOLOVKO, leg Anatolevich, Saratovskaya obl., 410508 (RU); LAGUTIN, Sergey Sergeevich, Saratov, 410048 (RU); SIEKLUCKI, Sergey Anatolevich, Shelkovskaya 366108 Chechenskaya respublika (RU)
(74) Representative: Sach, Greg Robert
(86) International application number: PCT/RU2021/050424
(87) International publication number: WO 2022/124945

(57) **Abstract**

The invention relates to the field of electromechanics and can be used in asynchronous electric machines to improve their characteristics. The technical problem of the invention is the need to improve the traction and overload capacity and increase the starting torque of asynchronous electric machines. The rotor of an asynchronous electric machine contains a package of magnetic circuit plates with a straight, bevel-free, short-circuited rotor winding of the "squirrel cage" type, which contains short-circuited washers permanently mounted on both ends of it; in this case, the short-circuited winding of the rotor is made in two rows, in the form of internal and external rows, between which the magnetic core of the rotor is placed. The inner row of the short-circuited rotor winding is made in the form of a row of rods, or from a single solid sleeve of conductive non-magnetic material. The number of rods in one row of its squirrel cage-type short-circuited winding differs from the number of slots of the stator in a smaller direction by the number of pairs of poles of the electric machine. 1 n.s.p.f., 2 z.p.f., 5 FIG.

## Description

The invention relates to the field of electromechanics and can be used in asynchronous electrical machines to improve their performance.

A short-circuited rotor of an asynchronous electric motor with closed grooves is known, which have a steel rim separating them from the air gap. The steel rim, which closes the slots of the rotor magnetic circuit from the outside, with an increase in load, has a shunting effect on the main magnetic flux coming from the stator, in which a significant part of it closes on this rim without entering the cells of the "squirrel cage". At the same time, the load capacity of the asynchronous motor is significantly reduced, leading to a loss of torque and a complete stop of the rotor during overload.

Also known is the rotor of an asynchronous machine having a beveled shape of "squirrel cage" rods. The beveled poles of the magnetic core of such a rotor also have a shunting effect on the magnetic flux of the stator and at high loads create its flow along the outer contour of the rotor without the necessary immersion in the short-circuited cells of the "squirrel cage". This also significantly reduces the load capacity of the asynchronous electric machine and leads to a loss of torque and a complete stop of the rotor during overload.

The closest to the device of the model described below is the rotor presented in the patent RU 2104608. This is a massive rotor of an electric machine, in the magnetic circuit of which there are longitudinal straight and transverse annular grooves filled with materials with different properties. The longitudinal grooves are filled with electrically conductive non-magnetic material, and the transverse grooves are filled with magnetically conductive dielectric material. The central part of the described rotor is made of a magnetically-electrically conductive composite material with specified properties. The disadvantages of this model include: magnetic shunting of the stator poles by transverse magnetic conductor rings of the described rotor when operating in the field of high loads and at startup; high electrical resistance of the composite material of the inner part, causing it to heat up when large rotor currents flow; high resistance of the magnetic circuit of the magnetic circuit, due to the small cross-section of the magnetic conductor material, divided into segments by longitudinal grooves; large variability in the designs of the pole division of the rotor; low manufacturability of the product, due to the multi-step layout of the rotor and a high variety of materials used, of which there are more than four on one rotor.

The rotor model described below for an asynchronous machine lacks all of the above disadvantages.

The technical problem of the invention is the need to improve the traction and overload capacity and increase the starting torque of asynchronous electric machines.

When using the invention, the following useful technical results have been achieved:
1. The output time of an asynchronous electric machine for operating revolutions under load has been reduced. This happens by reducing the electrical resistance of the squirrel cage circuits. The rotor current at start-up reaches higher values with increasing torque. The acceleration time of the rotor decreases at the same time.
2. The starting torque of the asynchronous electric machine has been increased. This happens by reducing the electrical resistance of the squirrel cage circuits. The rotor current at start-up reaches higher values with increasing torque.
3. The overload capacity of the asynchronous electric machine has been increased many times. This happens by reducing the electrical resistance of the squirrel cage circuits. The rotor current under load reaches higher values with increasing torque.
4. The surface of the rotor shaft of an asynchronous electric machine has received effective protection from heating by eddy currents. The magnetic induction flux of the stator is closed in the magnetic core of the rotor, concentrating in a contour formed by two rows of squirrel cage and short-circuiting washers, without leaving the part of the rotor where the shaft is located.
5. The energy efficiency class of the asynchronous electric machine has been increased by 1-2 steps. This is due to a decrease in the electrical resistance of the squirrel cage circuits, which during operation leads to a decrease in electrical (thermal) losses in the rotary circuit and an increase in the efficiency of the electric machine as a whole.

The invention, using the example of a cylindrical rotor, is explained by the drawings: FIG. 1 - rotor magnetic core with slots for a squirrel cage and a number of holes for conductive elements of the inner row of conductive rods, cross-sectional view; FIG. 2 - short-closing washer; FIG. 3 - efficiency diagrams of the factory and modified rotor; FIG. 4 - squirrel a cage with an additional inner row of conductive rods (cross-sectional view, without a magnetic core); FIG. 5 - a squirrel cage with an additional inner row made in the form of a sleeve (cross-sectional view, without a magnetic core); FIG. 6 is an example of practical implementation.

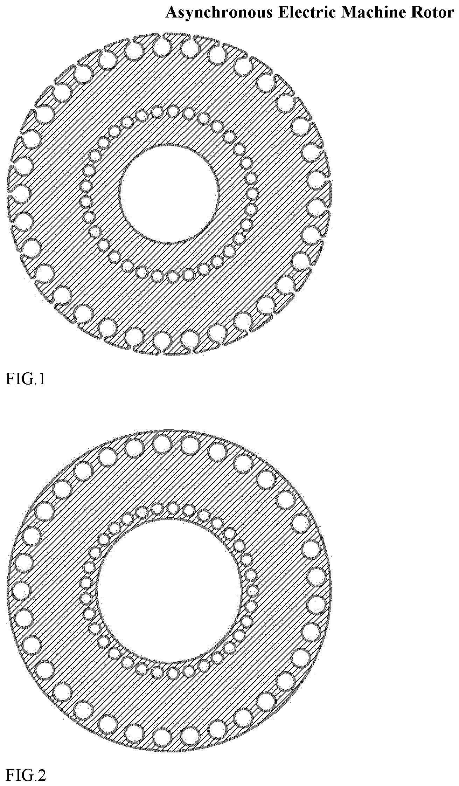

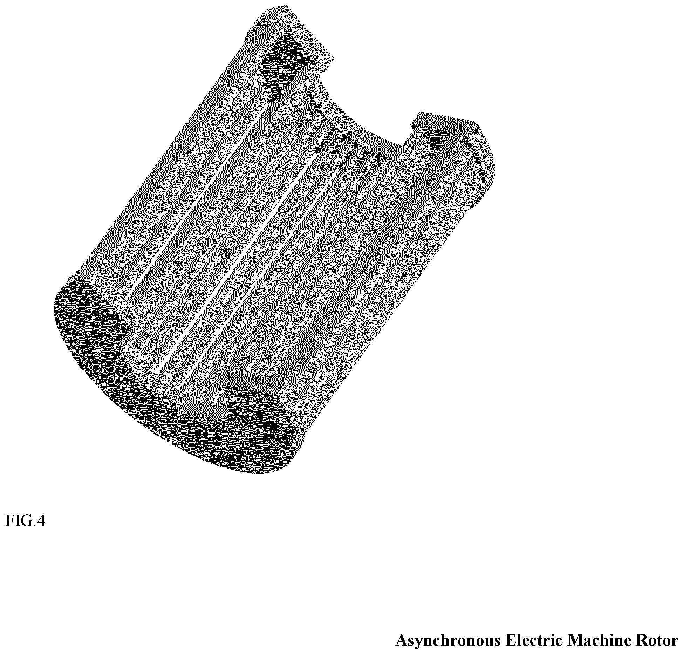

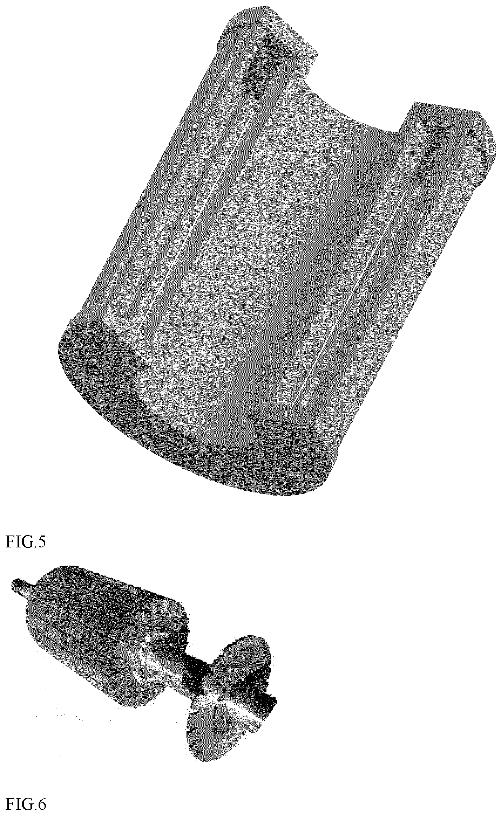

The rotor of the asynchronous machine contains a package of magnetic circuit plates (FIG. 1) made of electrical steel with a straight, bevel-free, short-circuited rotor winding of the "squirrel cage" type, which contains short-circuited washers permanently mounted on both ends of it (FIG. 2); in this case, the short-circuited winding of the rotor is made double-row in the form of internal and external rows of conductive elements (Fig. 4, 5). The inner row of the short-circuited winding of the rotor is made in the form of a row of rods (FIG. 4) or from a single solid sleeve of conductive non-magnetic material (FIG. 5). The number of rods of the outer row of its squirrel cage-type short-circuited winding differs from the number of slots of the stator in a smaller direction by the number of pairs of poles of the electric machine.

The inner row of rods has a direct electrical connection with the rods of the "squirrel cage", made of conductive material, through two end short-circuiting washers - FIG.2.

The cross-section of the magnetic core of the rotor located in the space between the rows of the "squirrel cage" should be equal to the cross-section of the magnetic core of the stator.

Technologically, all conductive elements can be made in one step, by direct casting into the straight grooves of the magnetic core of the rotor, molten non-magnetic conductive metal - copper, aluminum or other electrically conductive materials.

The rotor works as follows. The magnetic flux induced by the stator passes through the magnetic core of the rotor. At the same time, it passes between the short-circuited rotor rods, inducing EMF in them. The induced EMF, in turn, creates its own magnetic field, lagging in phase from the stator field, which begins to interact with the stator field. Thus, the moment of movement is created. The cross-section of the conductive rods is taken two times smaller than in a traditional squirrel cage. The electric current flows between the rods of the outer and inner rows of the "squirrel cage" through a short-circuited washer - having a shorter passage path and reaching higher values with a greater torque than in a traditional "squirrel cage".

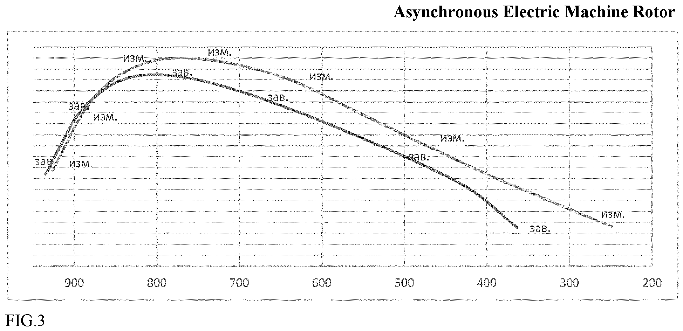

**An example of practical implementation.** Consider an example of a rotor for an industrial asynchronous motor at 1000 rpm, with a 36-slot stator (FIG. 6). The motor has three pairs of poles, so the number of rods of the "squirrel cage" of the rotor is chosen three less than the slots in the stator, that is, 33 rods. The inner row also has 33 rods, their angular position is between the rods of the "squirrel cage" - FIG. 1. The rotor at the ends has two washers that close together the rods of the "squirrel cage" and the elements of the inner row of rods - FIG. 2. After the alteration, comparative tests of the engine were carried out - with the factory rotor ("head" in FIG.3) and with a rotor modified using the present invention ("change" in FIG. 3). A mechanical load was applied to the motor shaft and the dependence of the engine efficiency on the load with fixed speed was removed. FIG. 3 shows the engine speed scale horizontally, and the efficiency scale vertically. Obviously, the modified rotor demonstrates higher efficiency values in comparison with the factory version. This was achieved by using a straight "squirrel cage" and numerical proportions of the pole division of the rotor, calculated by the number of slots of the stator and pairs of poles of the electric machine, which allowed to obtain the maximum value of the magnetic voltage at the poles of the rotor. In the graph of Fig. 3 there is also a noticeable sharp decrease in the efficiency of the motor when using the factory rotor in the region of 420 rpm, up to its complete stop, despite the fact that the modified rotor continues to carry the load under the same conditions. The reason for the failure of the characteristics of the factory rotor was the axial bevel of its poles, which at a certain load shunted the main magnetic flux coming from the stator.

## Claims

1. The rotor of an asynchronous electric machine, containing a package of magnetic circuit plates with a straight, not having bevels, short-circuited rotor winding of the "squirrel cage" type laid in its grooves, containing short-circuit washers permanently installed on its both ends; at the same time, the short-circuited winding of the rotor is made in two rows, in the form of inner and outer rows, between which the magnetic circuit of the rotor is placed.

2. The rotor of an asynchronous electric machine according to claim 1, **characterized in that** the inner row of the short-circuited winding of the rotor is made in the form of a row of rods, or from one continuous sleeve made of a conductive non-magnetic material.

3. The rotor of an asynchronous electric machine according to claim 1, **characterized in that** the number of rods in one row of its short-circuited winding of the "squirrel cage" type differs from the number of stator slots down by the number of pole pairs of the electric machine.
